# EUROPEAN PATENT APPLICATION

(11) **EP 3 260 201 A1**
(43) Date of publication of application: **27.12.2017**
(21) Application number: 16305751.6
(22) Date of filing: 21.06.2016
(51) Int. Cl.: B01L 3/00, B01L 3/02

(54) **MICROFLUIDIC FILTRATION UNIT AND RELATED MICROFLUIDIC SYSTEM**

(71) Applicant: HIFIBIO, 75005 Paris (FR)
(72) Inventor: ELLOUZE, Sami, 92290 CHATENAY MALABRY (FR); JENSEN, Allan, 1864 FREDERIKSBERG C (DK); REICHEN, Marcel, CH-8820 WAEDENSWIL (CH); SHEN, Bingqing, 60750 CHOISY-AU-BAC (FR)
(74) Representative: CH Kilger Anwaltspartnerschaft mbB

(57) **Abstract**

The microfluidic filtration unit (12) comprise a central channel (90) extending in a main direction, the central channel (90) comprising an inlet portion (96), a central portion (98), and a dead-end portion (100) which is blind in the main direction.

The lateral channel (94) comprise an entrance portion (120) opening in the central portion (98) of the central channel (90), at least the entrance portion (120) of the lateral channel (94) extending in a backward direction, the angle between the main direction and the backward direction being less than 90°.

The output channel (92) is separate from the central channel (90), the lateral channel (94) emerging in the output channel (92).

## Description

The present invention concerns a microfluidic filtration unit.

The microfiltration fluidic filtration unit is provided in a microfluidic system, in order to filter a fluid circulating into the microfluidic system.

By "microfluidic", it is generally meant that the dimensions of the passages in which the fluid circulates are smaller than one millimeter and are comprised for example between 1 µm and 1 mm.

The microfluidic filtration unit and the microfluidic system are advantageously formed on a solid support, such as a microfluidic chip.

The microfluidic filtration unit is for example used in a microfluidic system intended to prepare successive droplets of an inner fluid, dispersed in an outer fluid. The droplets comprise at least one medium dispersed or dissolved in the inner fluid, preferably at least a first medium dispersed and/or dissolved in the inner fluid and a second medium dispersed and/or dissolved in the inner fluid.

The microfluidic filtration unit is for filtering at least one of the first and/or second medium before it is mixed with the inner fluid.

In particular, the microfluidic system is a biological assay system which delivers droplets containing a single biological entity and at least a medium able to interact with the single biological entity.

An example is a single cell transcripts capture system. In such a system, a cell is isolated in a droplet of inner fluid, with a first medium comprising a buffer, a lysis and a marker, and a second medium, being a reverse transcriptase mix comprising enzyme and buffer. The first medium comprises hydrogel beads onto which specific single strand oligonucleotides are grafted. The oligonucleotides include a unique barcode marker.

Such a microfluidic system is disclosed for example in WO 2015/164212. In this system, a main channel is fed with an inner fluid containing cells. Closely packed hydrogel beads carrying a marker are also fed into the inner fluid. An outer fluid, immiscible with the inner fluid, is added transversely to the main channel to create a dispersion of droplets containing the inner fluid.

At least some droplets contain a biological entity and a bead with biological markers. The droplets are then activated to allow the reverse transcription of RNA contained in the cell along with the specific marker available on the single strand oligonucleotides. Then, the single cell barcoded cDNA produced in each droplet can be recovered and further analyzed.

The microfluidic system described in WO 2015/164212 is not entirely satisfactory. In particular, the efficiency of the analysis requires that almost each droplet produced in the microfluidic system is loaded with a single biological entity and with a single specific hydrogel bead carrying a single unique barcode.

Such an objective can be achieved only if an almost constant flowrate of delivery of the different media in the microfluidic system is maintained, regardless of the content of the different media. Nevertheless, in some cases, the first medium and/or the second medium contain impurities, in particular fibers or larger objects, which affect the delivered flow rate, and in some cases clog the microfluidic system.

One aim of the invention is therefore to provide a microfluidic filtration unit for a microfluidic system generating droplets, which can efficiently filter a medium intended to be introduced in successive microfluidic droplets, to improve the distribution of the medium in the successive droplets.

In particular, when the medium contains dispersed elements, such as hydrogel beads the aim of the invention is to efficiently filter the medium, without affecting the loading of the dispersed elements into successive droplets.

To this aim, the subject-matter of the invention is a microfluidic filtration unit comprising:
- a central channel extending in a main direction, the central channel comprising an inlet portion, a central portion, and a dead-end portion which is blind in the main direction,
- at least a lateral channel comprising an entrance portion opening in the central portion of the central channel, at least the entrance portion of the lateral channel extending in a backward direction, the angle between the main direction and the backward direction being less than 90°,
- at least an output channel separate from the central channel, the lateral channel emerging in the output channel.

The microfluidic filtration unit according to the invention may comprise one or more of the following feature(s), taken solely, or according to any technical possible combinations:
- the width of the central portion is greater than the width of the lateral channel, preferably between 80% and 100 % of the width of the lateral channel;
- the length of the dead-end portion in the main direction is greater than the width of the central portion, preferably between 200 % and 500 % of the width of the central portion;
- the entrance portion of the lateral channel has a curved section;
- the lateral channel has an "S" shape;
- it comprises at least a set of lateral channels comprising at least two lateral channels distributed along a side of the central portion, each lateral channel comprising an entrance portion, the central portion of the central channel opening in each entrance portion, at least the entrance portion of each lateral channel extending in a backward direction, the angle between the main direction and each backward direction being less than 90°;
- the filtration unit comprises at least two output channels, each lateral channel of a set of lateral channels opening in the same output channel, the output channels preferably extending in the main direction;
- it comprises at least two sets of lateral channels distributed respectively on two sides of the central portion;
- it comprises an inlet portion having a funnel shape.
- the dead end portion is delimited laterally by opposite longitudinal surfaces connected together by a transverse end surface.

The invention also concerns a microfluidic system comprising:
- a supply zone for introducing a fluid to be filtered, and a collection zone for collecting a filtered fluid,
- at least a filtration unit, advantageously a plurality of filtration units, as defined above, the inlet portion of the central channel of each filtration unit being in fluidic communication with the supply zone, each lateral channel opening in an output channel, each output channel being in fluidic communication with the collection zone.

The microfluidic system according to the invention may comprise one or more of the following feature(s), taken solely, or according to any technical possible combination:
- it comprises a working channel extending in a working direction, preferably substantially perpendicular to the main direction, wherein the collection zone is fluidly connected to the working channel through a distribution canal opening in the working channel, the distribution canal extending in a connecting direction, the angle between the connecting direction and the working direction being less than 45°;
- it comprises a source containing the fluid to be filtered, the fluid to be filtered comprising a plurality of particles intended to flow toward the collection zone and the width of the lateral channel being greater than the diameter of the particles, preferably being comprised between 1.01 and 1.99 times the diameter of the particles.

The invention also concerns a method for filtering a fluid, providing a microfluidic filtration unit as defined above, passing the fluid in the central channel, flowing the medium in the backwards direction in the at least one lateral channel, retaining elongated impurities in the blind lumen of the dead-end portion.

The method according to the invention may comprise one or more of the following feature(s), taken solely, or according to any technical possible combination:
- a step of dispensing the medium in an inner fluid, and dispersing the inner fluid containing the medium in an outer fluid to form droplets of inner fluid containing the medium in the outer fluid;
- the medium comprises beads, in particular hydrogel beads, the inner fluid comprising biological entities, in particular cells and/or clumps/aggregates of cells, the formation of the droplets comprising the encapsulation of at least one biological entity and of at least one bead in each of several successive droplets.

The invention will be better understood, upon reading of the following description, given solely as an example, and made in view of the following drawings, in which:
- figure 1 is an upper view of a first microfluidic system according to the invention;
- figure 2 is an enlarged view of a medium supply of the system of figure 2 comprising a plurality of microfiltration units according to the invention;
- figure 3 is an enlarged view of a microfiltration unit according to the invention;
- figure 4 is a view of hydrogel beads circulating in a channel of the microfluidic filtration unit;
- figure 5 is a view of an example of a droplet produced with the microfluidic system according to the invention;
- figure 6 is a view of the droplet of figure 5 after activation of the transcription.

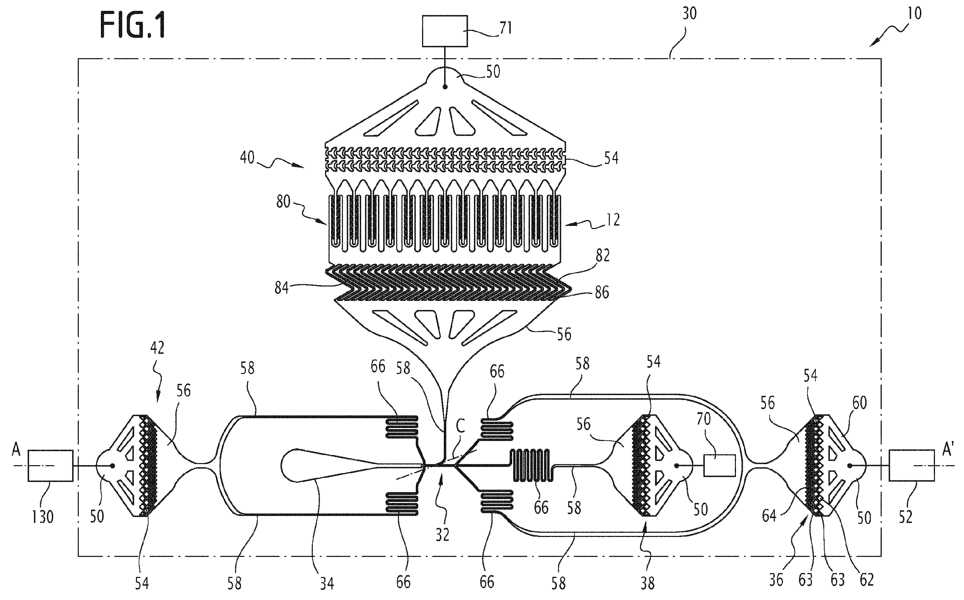

A first microfluidic system 10 comprising at least a microfluidic filtration unit 12 according to the invention is shown in figure 1.

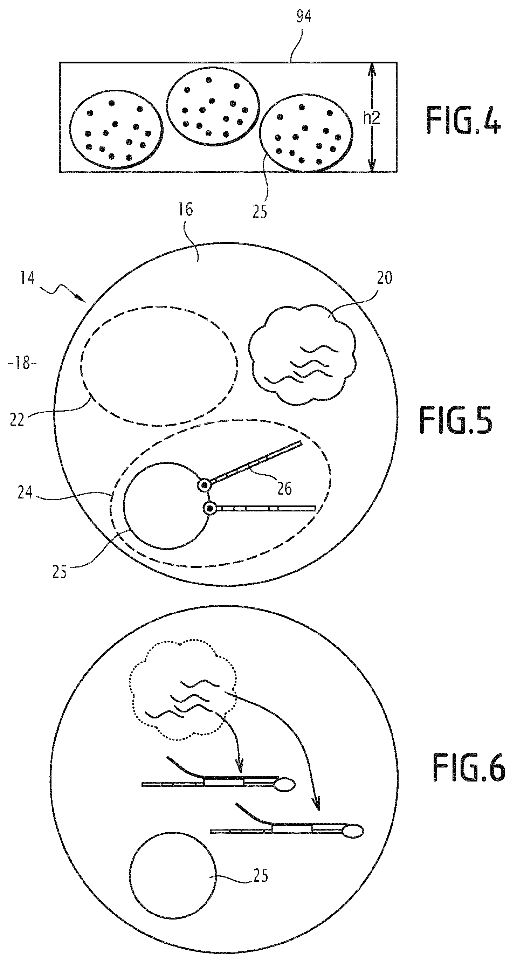

The microfluidic system 10 is for example for forming successive droplets 14 (shown in figures 4 and 5) of an inner fluid 16 dispersed in an outer fluid 18 immiscible with the inner fluid 16. By "immiscible" it is generally meant that less than 0.01 % of the inner fluid is able to solve in the second fluid at 25°C and ambient pressure.

In the example of figure 5, the droplets 14 of inner fluid 16 contain at least a biological entity 20, a first medium 22 and a second medium 24 which are loaded in the inner fluid before forming each droplet 14.

In the example of figure 5, the biological entity 20 is a cell. The first medium 22 is a lysis buffer and reverse transcriptase mix (enzyme and buffer). The second medium 24 contains a bead 25 of hydrogel, onto which marking oligonucleotides 26 are grafted. The oligonucleotides define a barcode unique to the bead 25 contained in the droplet 14.

Preferably, at least 90% of the droplets 14 formed in the microfluidic system 10 contain one single cell 20, and one single bead 25.

In the present example, after being produced in the microfluidic system 10, the successive droplets 14 are submitted to a treatment, for example a photoactivated treatment such as a photocleavage, in order to cleave the biological entity and to release genetic material contained in the biological entity, such as mRNAs 27. As shown in figure 6, the oligonucleotides 26 are able to be cleaved from the beads 25 and to interact with the genetic material in order to produce a single cell barcoded cDNA in the droplet 14. The cDNA can then be released from the droplet 14 and analyzed by known means.

In reference to figure 1, the microfluidic system 10 comprises at least a support 30, in particular a chip, onto which a microfluidic pattern is formed.

The support 30 carrying the microfluidic system 10 is preferably made in one piece of a single material, in particular a polymeric material such as polydimethylsiloxane (PDMS) or polymethylmethacrylate (PMMA), polycarbonate (PC), epoxy, in particular photopolymerizable epoxy such as marketed by Norland Optical Adhesives (NOA) or glass.

A shown in figure 1, the microfluidic system 10 comprises at least a working channel 32 emerging downstream into a collection outlet 34. The working channel 32 is for forming the successive droplets 14.

The microfluidic system 10 further comprises an upstream supply 36 of inner fluid 16 advantageously containing biological entities 20, an upstream supply 38 of first medium 22, and an intermediate supply 40 of second medium 24.

The microfluidic system 10 further comprises a downstream supply 42 of outer fluid 18.

The working channel 32 here extends linearly along an axis A-A' defining a working direction. Its maximum channel width is smaller than 250 micrometers and is comprised generally between 50 micrometers and 100 micrometers.

The upstream supply 36 of inner fluid 16 comprises a supply zone 50 connected to a source 52 of inner fluid 16 containing biological entities 20, an upstream filtering zone 54, a collection zone 56 located downstream of the upstream filtering zone 54, and at least a distribution canal 58 connecting the distribution zone 56 to the working channel 32.

The upstream filtering zone 54 is connected to the supply zone 50 by several distinct distribution passages 60. The upstream filtering zone 54 is for retaining the coarse particle and/or fiber contaminants potentially contained in the inner fluid 16. It comprises an enlarged filtering area fitted with a plurality of pillars 62 delimiting between them sinuous intermediary passages 64. The pillars 62 here have a polygonal cross section, in particular a diamond cross section. In a variant, the pillars 62 have a round cross section, in particular a circular cross section

In the example of figure 1, the upstream filtering zone 54 comprises at least two successive lines 63 of staggered pillars 62, the lines extending transversally to the axis A-A'.

The collection zone 56 converges toward the distribution canals 58.

In the example of figure 1, the upstream supply 36 comprises two separate distribution canals 58 surrounding the upstream first medium supply 38 and emerging into the working channel 32.

In this example, each distribution canal 58 is connected upstream to the collection zone 56. It delimits a zigzag fluidic resistor 66 forming a fluid resistor.

The distribution canals 58 emerge into the working channel 32 at the same location, on opposite sides of the working channel 32. Each distribution canal 58 emerges at an angle comprised between 30° and 50° with the longitudinal axis A-A', in the direction of flow towards the collection outlet 34.

The upstream supply 38 of first medium 22 is connected to a source 70 of first medium 22. It has generally the same structure as the upstream inner fluid supply 36, with a supply zone 50, an upstream filtering zone 54, a collection zone 56, and a distribution canal 58, provided with a fluidic resistor 66. It emerges axially in the working channel 32 at the same location as the distribution canals 58 of the upstream supply 36 of inner fluid 16.

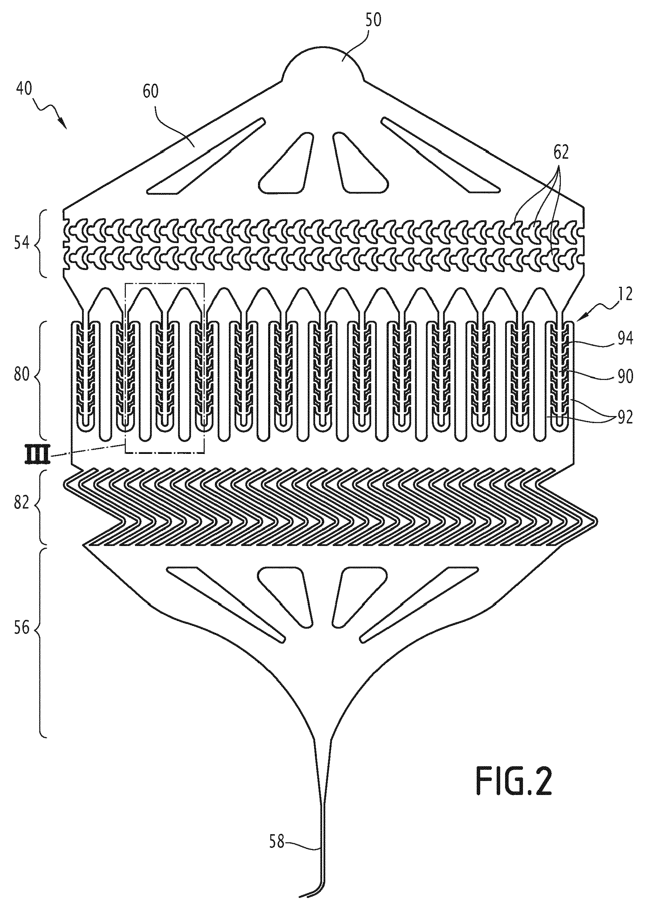

As shown in figure 2, the intermediate supply 40 comprises a source 71 of second medium 24, a supply zone 50 connected to the source 71, an upstream filtering zone 54, and a collection zone 56 located upstream of a distribution canal 58.

It further comprises an intermediate filtering zone 80 comprising a plurality of parallel microfluidic filtration units 12 according to the invention, and a downstream additional filtering zone 82 located between the intermediate filtration zone 80 and the second additional filtering zone 82.

The upstream filtering zone 54 is for retaining the coarse particle and/or fiber contaminants potentially contained in the second medium 24.

In the example of figure 2, the pillars 62 of the upstream filtering zone 54 of the intermediate supply 40 are "C shaped".

The additional filtering zone 82 comprises a plurality of "S"-shape walls 84 delimiting between them narrow filtering channels 86.

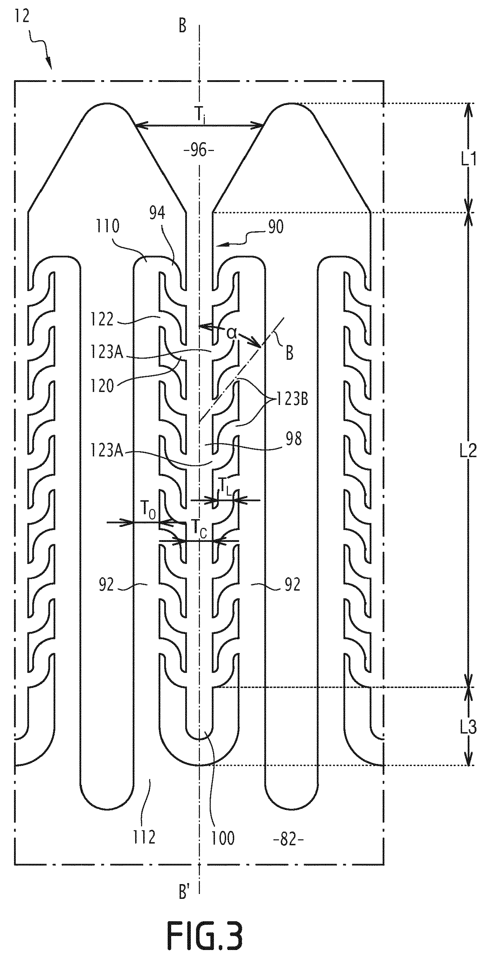

In reference to figure 3, each microfluidic filtration unit 12 according to the invention comprises a central channel 90 extending in a main direction parallel to an axis B-B', at least one and preferably two output channels 92, separate from the central channel 90, located on both sides of the central channel 90 and a plurality of lateral channels 94 connecting the central channel 90 to each output channel 92.

The central channel 90 has a tapering inlet portion 96, a linear central portion 98, connected to the lateral channels 94 and a dead-end portion 100 located at a downstream end of the central portion 98.

The width Ti of the inlet portion 96 reduces towards the central portion 98 to create a funnel effect.

The length L1 of the inlet portion 96, taken along axis B-B' is smaller than the length L2 of the central portion 98, taken along the same axis B-B'. The length L1 is generally comprised between 10% and 50% of the length L2 of the central portion 98.

The central portion 98 has a constant cross-section taken perpendicular to axis B-B'. The width Tc of the central portion 98 is for example smaller than 100 micrometers and comprised between 30 micrometers and 70 micrometers.

The cross-section of the central portion 98 is advantageously larger than the maximum cross-section of the beads 25.

The dead-end portion 100 is blind. It closes the central portion 98 at its downstream end.

The length L3 of the dead-end portion 100, taken along axis B-B', is greater than the width Tc of the central portion 98. The length L3 of the dead-end portion 100 is preferably greater than twice the width Tc and is advantageously comprised between 3 times and 5 times the width Tc of the central portion 98.

In the example of figure 3, the microfluidic filtration unit 12 comprises two lateral output channels 92 located on both sides of the central channel 90. Each output channel 92 here extends parallel to axis B-B', apart from the central channel 98.

The output channel 92 extends between a blind upstream end 110 located facing the central portion 98 of the central channel 90, in the vicinity of the inlet portion 96 and an open downstream end 112, fluidly connected to the distribution canal 58, through the second filtering zone 84 and the collection zone 56.

In this example, the downstream end 112 opens in the second additional filtering zone 82, upstream of the filtering channel 86.

The width To of the output channel 92 is equal to the width Tc of the central portion 98.

In the example of figure 3, the microfiltration unit 12 comprises a plurality of longitudinally spaced apart lateral channels 94, located on both sides of the central portion 98 of the central channel 90. Each lateral channel 94 emerges upstream in the central portion 98 of the central channel 90 and downstream in a respective output channel 92.

The number of lateral channels 94 on each side of the central portion 98 is greater than 2, preferably greater than 5.

The lateral channel 94 comprises at least an entrance portion 120 and an exit portion 122.

The entrance portion 120 is connected to the central portion 98 and extends in a backward direction B. In the example of figure 3, the exit portion 120 is connected to the output channel 92 and also extends in the backward direction B.

As shown in figure 3, the angle α between the backward direction B and the axis B-B' is less than 90°.

This angle is preferably comprised between 10° and 60°, more preferably between 20° and 50°.

The "backward direction B" is here defined by the axis passing through the center of the lateral channel 94 at its most backward position, here at the upstream opening 123A in the central channel 90 and the center of the lateral channel 94 downstream opening 123B in the output channel 92.

In the example of figure 3, the lateral channel 94 has a generally "S" shape, with the entrance portion 120 forming a first curved portion towards the central channel 90 and the exit portion 122 forming a second curved portion towards the output channel 92.

The maximum width TI of the lateral channel 94 is smaller than the width Tc of the central portion 98, and is preferably comprised between 80 % and 100 % of the width of the central portion 98 of the central channel 90.

Each lateral channel 94 on one side of the central portion 98 is symmetrical with a lateral channel 94 on the other side of the central portion 98.

The lateral channels 94 on each side of the central portion 98 are longitudinally separated along the axis B-B' of the central portion 98.

The lateral channels 94 do not overlap longitudinally. They are separated axially along the axis B-B', such that the upstream opening 123A of a lateral channel 94 in the central channel 90 is located spaced apart and upstream of the downstream opening 123B of an adjacent downstream lateral channel 94, opening in the output channel 92.

The provision of a dead-end portion 100 in the central channel 98, combined with lateral channels 94 extending backwards, efficiently retains the elements of the second medium 24 which need to be filtered, whereas the beads 25 of the second medium can easily pass through the lateral channels 94.

In reference to figure 1, the distribution canal 58 of the intermediate supply 40 of second medium 24 emerges in the working channel 32, downstream of the distribution canal 58 of the upstream supply 36 of inner fluid 16 and downstream of the upstream supply 38 of first medium 22.

The distribution canal 58 of the intermediate supply 40 extends in a tangential connecting direction C, the angle between the connecting direction C and the axis A-A' the working channel 32 being less than 45°. The outlet into the working channel 32 has an angle of preferably comprised between 30° and 35°, which further promotes the release of clogged items in that section of the channel into the larger channel.

The downstream supply 42 of outer fluid 18 is similar to the upstream supply 36. It comprises a source 130 of outer fluid 18, connected to a supply zone 50. The downstream supply 42 further comprises an upstream filtering zone 54 and of a collection zone 56 which are analogous to respectively the upstream filtering zone 54, and the collection zone 56 of the upstream supply 36.

The downstream supply 42 of outer fluid 18 comprises two parallel distribution canals 58, having fluidic resistors 66. Each canal 58 emerges transversely into the working channel 32, downstream of the distribution canal 58 of the intermediate supply 40 of second medium 24.

The operation of the microfluidic system 10 according to the invention will be now described.

Initially, the source 52 is connected to the supply zone 50 to distribute inner fluid 16 containing biological entities 20. The inner fluid 16 flows through the upstream filtering zone 54, the collection zone 56, and through the distribution channels 58 to the working channel 32.

At the same time, the source 70 of first medium 22 feeds the supply zone 50 of the upstream first medium supply 38. The first medium 22 flows into the upstream filtering zone 54 and the collection zone 56 to the distribution canal 58 of the upstream supply 38. The first medium 22 mixes with the inner fluid 16 distributed in the working channel 32 at the same location.

The source 71 of second medium 24 containing hydrogel beads 25 feeds the supply zone 50 of the intermediate supply 40. The second medium 24 flows through the first filtering zone 54 and enters the parallel filtration units 12.

In each filtration unit 12, the second medium 24 enters the inlet portion 96 and converges towards the central portion 98. It then flows through the central portion 98 downstream to the dead-end portion 100.

The impurities having a dimension greater than the channel width of the lateral channels 94 remain trapped in the central portion 98, preferably in the dead-end portion 100. This is particularly the case for long impurities such as needle type materials.

On the contrary, the second medium 24 containing beads 25 flows backwards through the lateral channels 94 and enters the output channels 92.

The second medium 24 then flows forwards into the output channels 92 on both sides of the central channel 98 to the downstream end 112. It then enters the second filtering zone 84, the collection zone 56, and the distribution canal 58 of the intermediate supply 40. The filtered second medium 24 is then added tangentially to the working channel 32, where it mixes with the flow of inner fluid 16 containing biological entities 20 and first medium 22.

The very efficient filtration in the filtration zone 80, containing several parallel microfluidic filtration units 12 according to the invention, maintains substantially constant the ratio of the flow of the second medium 24 added to the working channel 32 to the flow of the mix of inner fluid 16 containing biological entities 20 and of first medium 22 in the working channel. This allows a very even distribution of beads 25 and biological entities 20 in the working channel 32.

Then, droplets 14 of inner fluid 16 are formed by the transverse addition, in the working channel 32, of outer fluid 18 from the downstream supply 42. Less than 20% of the droplets 14, do not contain at least one bead 25.

The droplets 14 are then recovered from the collection outlet 34, and are activated as described before, in order to be analyzed.

The provision of a microfluidic filter unit 12 is therefore very efficient to filter the impurities present in the second medium 24, without affecting the flow of beads 25. A very homogenous distribution of beads 25 is therefore obtained when the beads 25 enter the working channel 32.

In an advantageous embodiment, shown in figure 4, the minimal channel width H2 of the lateral channel 94 in the filtration unit 12, in particular the height H2 of the lateral channel 94 is greater than the average number diameter of the beads 25. The minimal channel width H2 is generally comprised between 125% and 150% of the number average diameter of the beads 25.

This surprisingly allows a better repartition of the beads 25 and of the biological entities 20 in the successive droplets 14, and an increase in loading of the beads 25 in the droplets 14.

In a variant, the inner fluid 16 contains aggregates/clumps of biological entities such as aggregates/clumps of cells. Each droplet 14 is loaded with at a least an aggregate/clump of biological entities, preferably only one aggregate/clump of biological entities.

## Claims

1. A microfluidic filtration unit (12) comprising:
- a central channel (90) extending in a main direction, the central channel (90) comprising an inlet portion (96), a central portion (98), and a dead-end portion (100) which is blind in the main direction,
- at least a lateral channel (94) comprising an entrance portion (120) opening in the central portion (98) of the central channel (90), at least the entrance portion (120) of the lateral channel (94) extending in a backward direction, the angle between the main direction and the backward direction being less than 90°,
- at least an output channel (92) separate from the central channel (90), the lateral channel (94) emerging in the output channel (92).

2. A microfluidic filtration unit (12) according to claim 1, wherein the width of the central portion (98) is greater than the width of the lateral channel (94), preferably between 80% and 100 % of the width of the lateral channel (94).

3. A microfluidic filtration unit (12) according to claim 1 or 2, wherein the length of the dead-end portion (100) in the main direction is greater than the width of the central portion (98), preferably between 200 % and 500 % of the width of the central portion (98).

4. A microfluidic filtration unit (12) according to any one of the preceding claims, wherein the entrance portion (120) of the lateral channel (94) has a curved section.

5. A microfluidic filtration unit (12) according to claim 4, wherein the lateral channel (94) has an "S" shape.

6. A microfluidic filtration unit (12) according to any one of the preceding claims, comprising at least a set of lateral channels (94) comprising at least two lateral channels (94) distributed along a side of the central portion (98), each lateral channel (94) comprising an entrance portion (120), the central portion (98) of the central channel (90) opening in each entrance portion (120), at least the entrance portion (120) of each lateral channel (94) extending in a backward direction, the angle between the main direction and each backward direction being less than 90°.

7. A microfluidic filtration unit (12) according to claim 6, the filtration unit (12) comprising at least two output channels (92), each lateral channel (94) of a set of lateral channels (94) opening in the same output channel (92), the output channels (92) preferably extending in the main direction.

8. A microfluidic filtration unit (12) according to any one of claims 6 to 7, comprising at least two sets of lateral channels (94) distributed respectively on two sides of the central portion (98).

9. A microfluidic filtration unit (12) according to any one of the preceding claims, comprising an inlet portion (96) having a funnel shape.

10. A microfluidic system (10), comprising:
- a supply zone (50) for introducing a fluid to be filtered, and a collection zone (56) for collecting a filtered fluid,
- at least a filtration unit (12), advantageously a plurality of filtration units (12), according to any one of claims 1 to 9, the inlet portion (96) of the central channel (90) of each filtration unit (12) being in fluidic communication with the supply zone (50), each lateral channel (94) opening in an output channel (92), each output channel (92) being in fluidic communication with the collection zone (56).

11. A microfluidic system (10) according to claim 10, comprising a working channel (32) extending in a working direction, preferably substantially perpendicular to the main direction, wherein the collection zone (54) is fluidly connected to the working channel (32) through a distribution canal (58) opening in the working channel (32), the distribution canal (58) extending in a connecting direction, the angle between the connecting direction and the working direction being less than 45°.

12. A microfluidic system (10) according to any one of claims 10 or 11, comprising a source containing the fluid to be filtered, the fluid to be filtered comprising a plurality of particles intended to flow toward the collection zone (56) and the width of the lateral channel (94) being greater than the diameter of the particles, preferably being comprised between 1.01 and 1.99 times the diameter of the particles.

13. Method for filtering a fluid comprising a medium and elongated impurities,
- providing a microfluidic filtration unit (12) according to any one of claims 1 to 9,
- passing the fluid in the central channel (90),
- flowing the medium in the backwards direction in the at least one lateral channel (94),
- retaining elongated impurities in the blind lumen of the dead-end portion (100).

14. Method according to claim 13, further comprising a step of dispensing the medium (24) in an inner fluid (16), and dispersing the inner fluid (16) containing the medium (24) in an outer fluid (18) to form droplets (14) of inner fluid (16) containing the medium (24) in the outer fluid (18).

15. Method according to claim 14, wherein the medium comprises beads (25), in particular hydrogel beads (25), the inner fluid (16) comprising biological entities (20), in particular cells and/or clumps/aggregates of cells, the formation of the droplets (14) comprising the encapsulation of at least one biological entity (20) and of at least one bead (25) in each of several successive droplets (14).
